# FASCICULE DE BREVET EUROPEEN

(11) **EP 1 591 643 B1**
(45) Date de publication et mention de la délivrance du brevet: **04.07.2007**
(21) Numéro de dépôt: 05103332.2
(22) Date de dépôt: 25.04.2005
(51) Int. Cl.: F02C 7/04

(54) **Ensemble réducteur de bruit pour turboréacteur d'aéronef**
Lärmminderungsanordnung für Fluggasturbine
Noise reduction assembly for flight gas turbine

(30) Priorité: 27.04.2004 FR 0450794
(43) Date de publication de la demande: 02.11.2005
(73) Titulaire: AIRBUS France, 31060 Toulouse (FR)
(72) Inventeur: PORTE, Alain, 31770, COLOMIERS (FR); LALANE, Jacques, 31650, SAINT ORENS (FR)
(74) Mandataire: Poulin, Gérard

(56) Documents cités:
- FR-A- 2 474 099
- FR-A- 2 610 673
- FR-A- 2 767 560

## Description

### DOMAINE TECHNIQUE

L'invention concerne un ensemble réducteur de bruit pour un moteur d'aéronef, qui peut être implanté sur tous les turboréacteurs incluant une soufflante placée à l'intérieur d'une nacelle entourant le moteur.

L'ensemble réducteur de bruit comprend une structure d'entrée d'air et une pièce annulaire assurant le raccordement de la structure d'entrée d'air sur un carter de soufflante ; il peut être fixé au carter de soufflante.

### ÉTAT DE LA TECHNIQUE ANTÉRIEURE

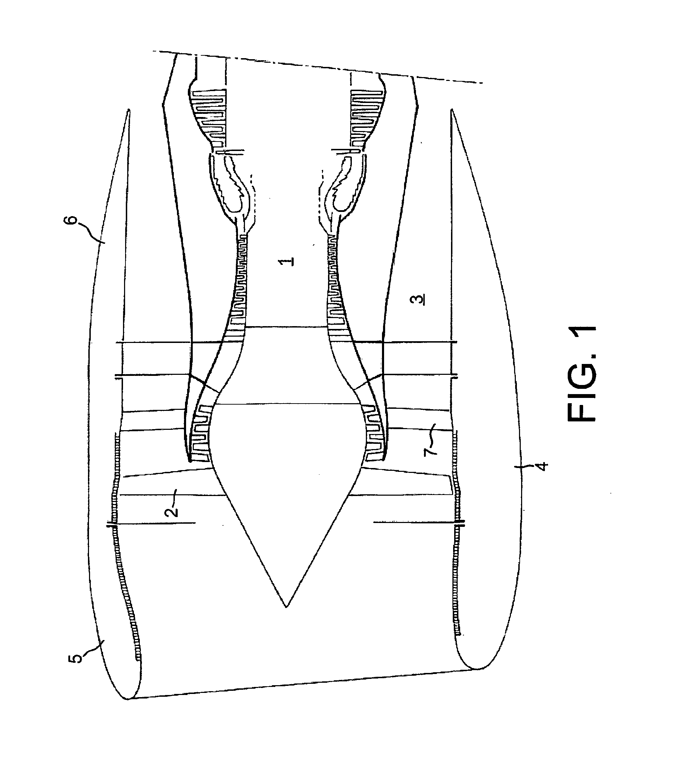

Sur la figure 1 est représenté très schématiquement un turboréacteur à double flux de conception classique, qui comprend un moteur central 1, centré sur un axe longitudinal et dont l'extrémité prévue pour être orientée vers l'avant est située sur la gauche de la figure. Par convention, les termes « avant » et « arrière » seront utilisés dans l'ensemble du présent texte en prenant pour référence l'avant et l'arrière du moteur.

A partir de son extrémité avant, le moteur central 1 comporte de façon connue un compresseur, une turbine haute pression entraînant le compresseur, une chambre de combustion et une turbine basse pression qui entraîne à son tour une soufflante placée à l'avant du moteur central 1. Les pales 2 de la soufflante sont situées dans un canal annulaire 3, appelé « canal de soufflante », délimité entre l'enveloppe extérieure du moteur central 1 et l'enveloppe intérieure d'une nacelle 4, disposée coaxialement autour du moteur central 1. Par convention, en l'absence d'une précision contraire, les termes « intérieur » et « extérieur » seront utilisés pour désigner la position ou l'orientation des pièces par rapport au canal de soufflante 3.

La partie avant de la nacelle 4 forme une structure d'entrée d'air 5 dont le bord d'attaque est caréné et dont l'extrémité arrière est fixée à l'extrémité avant d'un carter de soufflante 6, disposé autour de la soufflante. Le carter de soufflante 6 est relié mécaniquement et rigidement à la structure du moteur central 1 par au moins un ensemble de bras 7 orientés radialement, afin de maîtriser au mieux le jeu existant entre le carter 6 et les extrémités des pales de la soufflante 2.

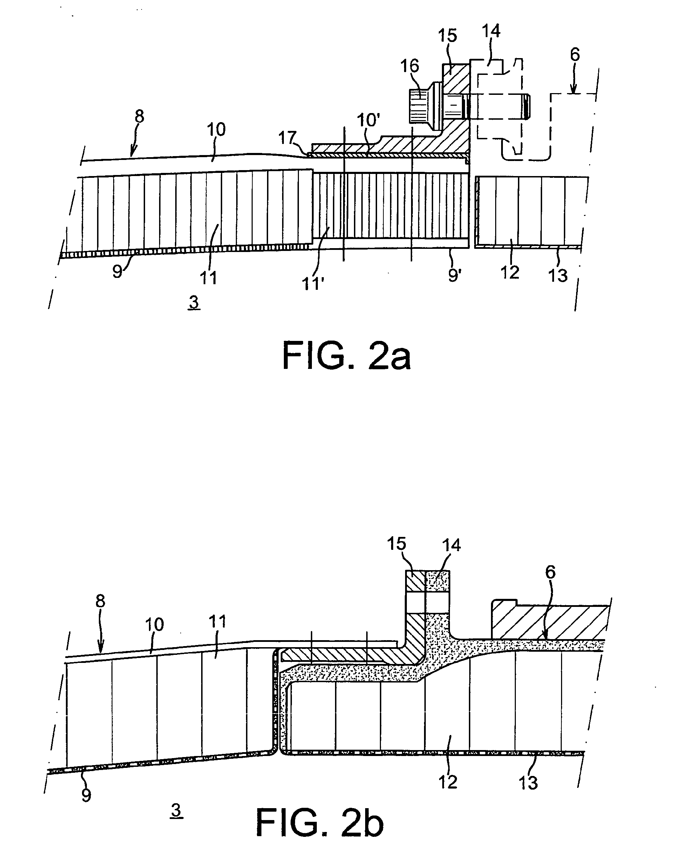

La zone de jonction entre l'extrémité arrière de la paroi intérieure 8 de la structure d'entrée d'air 5 et l'extrémité avant du carter de soufflante 6 est représentée plus en détails sur la figure 2a.

La réduction du bruit constitue l'un des objectifs prioritaires dans la conception de turboréacteurs, et, à cet effet, il est de pratique courante de réaliser une partie de la paroi intérieure de la nacelle 4 sous la forme d'une structure alvéolaire de réduction de bruit : ceci concerne la paroi intérieure de la structure d'entrée d'air 5 et du carter de soufflante 6 au moins en partie. Ainsi, dans les turboréacteurs classiques, en dehors de la zone dans laquelle s'effectue la jonction, la paroi intérieure 8 de la structure d'entrée d'air 5 présente une structure alvéolaire de réduction de bruit de type sandwich, composée d'une peau interne 9 perméable à l'air, d'une peau externe 10 imperméable à l'air, et d'une âme alvéolaire 11 interposée entre les peaux.

La peau interne 9 est réalisée par exemple sous la forme d'une tôle perforée ou d'un tissu ajouré en un matériau tel que du carbone ou un métal. La peau externe 10 est généralement une structure composite multicouche qui fait office de réflecteur acoustique et assure la transmission principale des efforts. Enfin, l'âme alvéolaire 11 est généralement de type nid d'abeilles et formée d'alvéoles de grandes dimensions.

Le carter de soufflante 6 est généralement une pièce métallique, de préférence évidée, au moins sur une partie de sa longueur, afin qu'une structure 12 de réduction de bruit équipe sa surface intérieure. La structure 12 est alors formée principalement d'une structure alvéolaire, revêtue d'une peau interne 13 perméable à l'air sur sa face tournée vers le canal de soufflante 3.

Afin de permettre l'assemblage de la structure d'entrée d'air 5 et du carter de soufflante 6, ce dernier est équipé, à son extrémité avant, d'une bride extérieure annulaire 14. L'assemblage est assuré par une pièce annulaire de raccordement 15, à section en forme de L, montée autour de l'extrémité arrière de la paroi intérieure 8 et fixée à la bride 14 par des boulons 16 circonférentiellement répartis.

Dans les turboréacteurs de l'art antérieur, la liaison entre la pièce annulaire de raccordement 15 et la paroi intérieure 8 de la structure d'entrée d'air est assurée par des organes de fixation tels que des vis fraisées ou des rivets (schématisés par des traits mixtes sur les figures 2), qui traversent l'extrémité arrière de la paroi intérieure 8.

Pour tenir compte du fait que la majeure partie des efforts transmis entre le moteur central 1 et la structure d'entrée d'air 5 transite par cette liaison, la structure de la partie arrière de la paroi intérieure 8 est modifiée dans cette zone de façon à être renforcée. Ainsi, la partie arrière de la paroi intérieure 8, sur laquelle est fixée la pièce annulaire de raccordement 15, présente une peau interne 9' renforcée et imperméable à l'air, une peau externe 10' également renforcée, ainsi qu'une âme alvéolaire 11' renforcée, en général métallique (aluminium) et très densifiée, formée d'alvéoles de dimensions réduites, souvent remplies de résine en vue de résister aux efforts d'écrasement des organes de fixation.

Cette technique a pour première conséquence une perte totale de l'effet de réduction de bruit dans la zone d'éclissage. Elle se traduit également par une augmentation de la masse dans la zone de jonction, par des risques de corrosion de l'âme alvéolaire 11' métallique, par des difficultés de fabrication (cintrage d'alvéoles de petite dimension, usinage en forme de l'âme alvéolaire), par des difficultés de pose des organes de fixation au travers de l'âme alvéolaire 11' et par des risques d'affaissement de la partie arrière de la paroi 8 sous charge à l'emplacement des organes de fixation.

Enfin, du fait que la paroi intérieure 8 est généralement fabriquée par drapages successifs sur un mandrin présentant la forme intérieure de la structure d'entrée d'air 5, ses dimensions extérieures sont peu précises. Avant de fixer la pièce annulaire de raccordement 15 sur l'extrémité arrière de la paroi 8, il est donc nécessaire d'effectuer une reprise d'usinage de cette surface extérieure et d'interposer une cale annulaire 17.

Un perfectionnement de l'élément existant a été décrit dans le document FR-A-2 767 560, et est illustré en figure 2b. La partie arrière de la paroi intérieure 8 utilisée afin d'assurer la jonction avec le carter de soufflante 6 est ici dépourvue d'âme alvéolaire, la peau interne 9 étant appliquée sur la peau externe 10. De ce fait, un espace annulaire est libéré à l'intérieur de la partie arrière de la paroi intérieure 8, qui est utilisé pour loger un prolongement vers l'avant de la structure alvéolaire 12, 13 de réduction de bruit qui équipe intérieurement le carter de soufflante 6.

Cet élément ne remédie cependant pas totalement aux inconvénients mentionnés plus haut. En effet, la structure sandwich du traitement acoustique (peau interne, âme alvéolaire, peau externe) possède des caractéristiques propres aux spécificités de l'onde acoustique à atténuer. La diminution de hauteur des cellules de l'âme alvéolaire 12 au niveau du prolongement vers l'avant entraîne un écart par rapport à l'onde à atténuer. De plus, une discontinuité acoustique est créée par la présence de la surface de jonction entre les deux structures de réduction de bruit 9-11 et 12-13, assimilable à une faible éclisse et provoquant une perte de performance acoustique.

### EXPOSÉ DE L'INVENTION

L'invention se propose de pallier les inconvénients concernant la jonction des zones acoustiques dans les nacelles de turboréacteurs.

L'invention a pour objet un ensemble réducteur de bruit incluant une structure d'entrée d'air telle que sa fixation à un carter de soufflante d'un turboréacteur d'aéronef permet de réduire le bruit également à la jonction entre les deux éléments.

Sous l'un de ses aspects, l'invention propose un ensemble réducteur de bruit comprenant une pièce annulaire de raccordement entre structure d'entrée d'air et carter de soufflante, et une structure d'entrée d'air dont la paroi intérieure, traitée acoustiquement, fait saillie vers l'arrière du moteur par rapport au plan de jonction de cette pièce de raccordement. Ainsi, la paroi intérieure de la structure d'entrée d'air peut-elle former jusqu'à la totalité de la zone acoustique de la nacelle du turboréacteur. En d'autres termes, la paroi intérieure est constituée d'une structure d'atténuation de l'onde sonore qui se prolonge au-delà de la structure d'entrée d'air elle-même vers la soufflante, voire jusqu'au niveau habituel où le traitement pour la réduction de bruit de la nacelle n'est plus nécessaire, supprimant ainsi toute discontinuité de la zone acoustique sur la paroi intérieure de la nacelle.

Sous un aspect classique, la structure d'atténuation de l'onde sonore de la paroi intérieure peut être munie d'une âme alvéolaire réductrice de bruit.

Avantageusement, l'ensemble réducteur de bruit est couplé à un carter de soufflante muni d'une bride annulaire qui est fixée sur la pièce annulaire de raccordement.

La pièce annulaire de raccordement comprend une première partie destinée à être fixée à la bride du carter, et une deuxième partie destinée à être fixée à la paroi intérieure de la structure d'entrée d'air. La fixation peut être amovible, effectuée par exemple par des rivets, ou la deuxième partie peut être intégrée à la paroi intérieure, par exemple réalisée en plis de carbone. De préférence, les deux parties forment un L en coupe. La pièce annulaire de raccordement peut être équipée de parties de centrage au niveau de la structure d'entrée d'air.

Dans un mode de réalisation, la pièce annulaire est montée de la manière habituelle, c'est-à-dire que la première partie fixée sur la bride du carter est la plus en arrière, et la deuxième partie est orientée vers le haut et fixée entre l'avant de la structure d'entrée d'air et la zone de contact, ou projection, de la première partie sur la paroi intérieure.

Il est également possible d'inverser cette géométrie et d'orienter et de fixer la deuxième partie de la pièce annulaire sur la portion de la paroi intérieure qui se prolonge vers l'arrière au-delà de la structure d'entrée d'air vers le carter de soufflante. Dans ce cas, avantageusement, la paroi intérieure est conformée de façon à faciliter la fixation entre la paroi et la deuxième partie de la pièce annulaire. A cet effet, la paroi intérieure comporte par exemple un évidement à son extrémité arrière, pour que les deux faces d'une partie externe de la paroi intérieure soient accessibles.

Avantageusement, l'extrémité arrière de la paroi intérieure qui est dirigée vers le carter de soufflante est renforcée, afin de prendre en compte le problème d'éclatement possible d'une pale de soufflante.

Il est possible de modifier la structure de la paroi intérieure à son extrémité arrière, c'est-à-dire de la partie en saillie, par un renforcement de la structure d'atténuation de l'onde sonore, en particulier de l'âme alvéolaire, ou par la présence d'un élément de renfort. La structure acoustique peut également être raccourcie.

### BRÈVE DESCRIPTION DES DESSINS

Les figures annexées permettront de mieux comprendre l'invention, mais ne sont données qu'à titre indicatif et ne sont nullement restrictives.

La figure 1, déjà décrite, représente schématiquement en coupe longitudinale un turboréacteur à double flux classique.

Les figures 2a et 2b, déjà décrites, illustrent à plus grande échelle la zone de jonction entre la structure d'entrée d'air et le carter de soufflante selon l'état de la technique.

La figure 3 illustre les zones acoustiques pour une nacelle de moteur selon l'état de la technique.

Les figures 4a et 4b montrent des exemples de réalisation de l'élément réducteur de bruit selon l'invention.

La figure 5 montre un mode de réalisation selon l'invention.

La figure 6 montre un autre mode de réalisation selon l'invention.

### EXPOSÉ DÉTAILLÉ DE MODES DE RÉALISATION PARTICULIERS

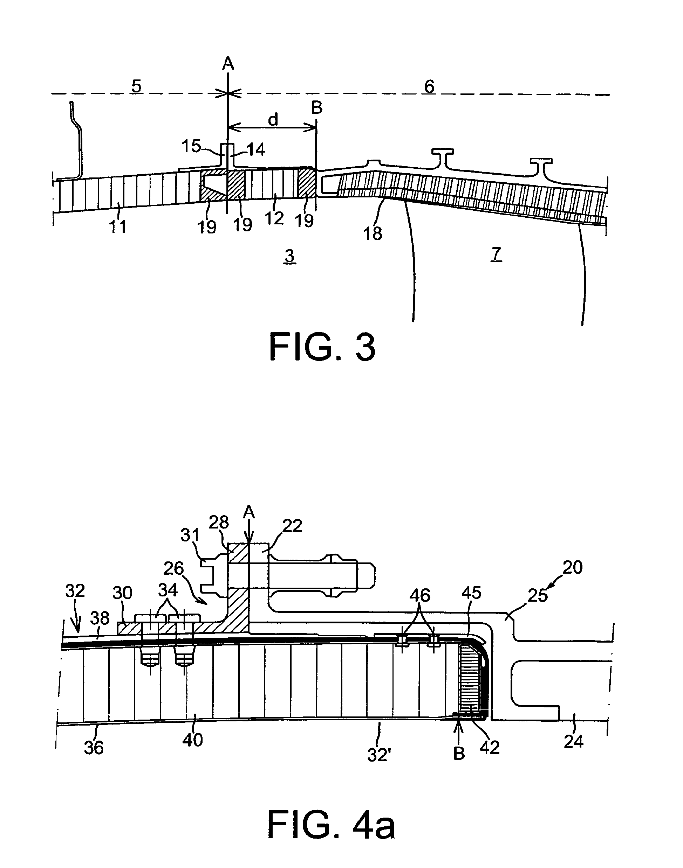

Tel que schématisé sur la figure 3, dans une nacelle 4 de moteur d'avion, la structure d'entrée d'air 5 se joint au carter de soufflante 6 par une fixation, par exemple par boulons, entre la pièce de raccordement 15 et la bride 14 annulaires : le plan A ainsi défini de la jonction sépare de fait les deux entités « structure d'entrée d'air » 5 et « carter de soufflante » 6. Par ailleurs, vers l'arrière du canal de soufflante 3, il n'est plus nécessaire que la paroi intérieure 18 de la nacelle 4 soit traitée pour atténuer les bruits. Cependant, la séparation entre les zones acoustique (à l'avant du canal de soufflante 3) et non acoustique 18 s'effectue à un endroit différent de la jonction A : la limite B entre ces zones est située légèrement à l'avant des bras structuraux 7, mais en arrière de la jonction A, à une distance d.

De fait, quelle que soit la solution retenue par l'état de la technique pour le montage de la structure d'entrée d'air 5 et du carter de soufflante 6, au sein de la zone où le traitement acoustique est requis (en avant de B), il existe des zones 19 où la paroi intérieure n'est pas « acoustique », c'est-à-dire réductrice de bruit, comme en particulier toutes les jonctions entre âmes alvéolaires différentes. Or une succession de zones acoustiques 11, 12 et de zones non acoustiques 19 diminue l'efficacité du traitement acoustique global : quelle que soit la bonne qualité du traitement acoustique de l'entrée d'air 5, la qualité globale du traitement acoustique de l'ensemble structure d'entrée d'air 5 / carter de soufflante 6 est altérée suite à l'alternance de zones acoustiques et non acoustiques.

Selon l'invention, il est proposé de réduire le bruit dans la zone intermédiaire d, en particulier de supprimer l'alternance entre zones acoustique et non acoustique. A cet effet, conformément à un mode de réalisation préféré de l'invention, la partie arrière de la paroi intérieure 8 de la structure d'entrée d'air 5 utilisée pour assurer la jonction avec le carter de soufflante 6 est prolongée vers le carter de soufflante 6 jusqu'à la limite B de la zone acoustique. Il est clair que le niveau du plan de jonction A entre la structure d'entrée d'air 5 et le carter de soufflante 6 proprement dit est déterminé par des paramètres mécaniques et n'est pas modifié.

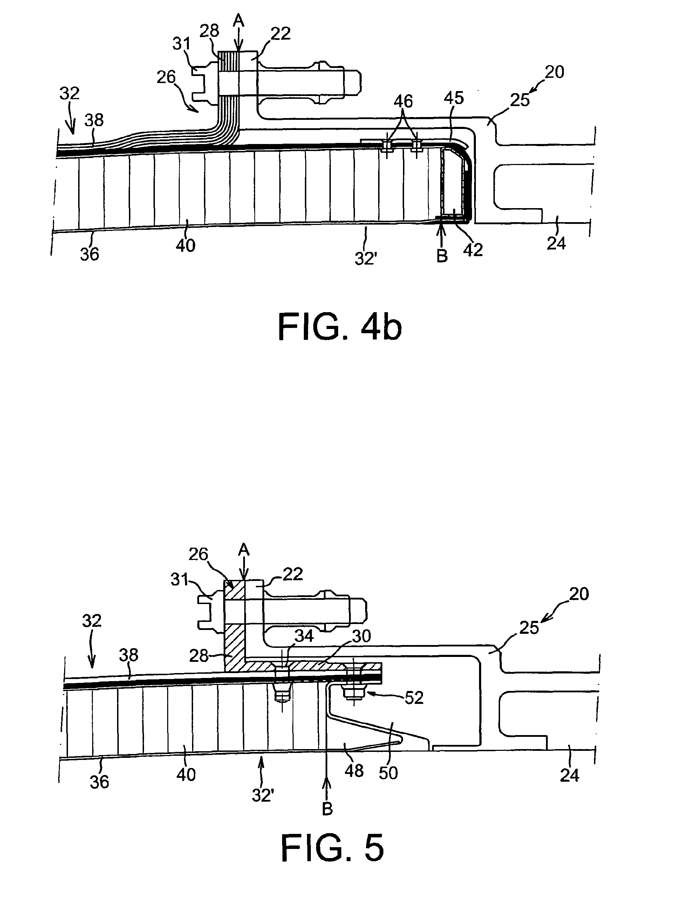

Les figures 4 à 6 présentent différents modes de réalisation de l'invention.

Sur la figure 4a, le carter de soufflante 20 comprend une bride de raccordement 22 à son extrémité avant. La paroi intérieure 24 du carter de soufflante 20 est en retrait vers l'arrière par rapport à la bride de raccordement 22 de façon à être localisée, une fois montée, dans une zone « non acoustique » de la nacelle, et donc n'est pas traitée acoustiquement dans ce cas. Ce mode de réalisation est préféré, mais il est possible que la paroi intérieure 24 du carter se prolonge en avant de la limite B, auquel cas elle peut présenter, de façon connue, un insert réducteur de bruit (figure 2a). Dans les deux cas, la bride de raccordement 22 est reliée à l'extrémité avant de la paroi intérieure 24 par une virole 25 réalisée d'un seul tenant avec la bride 22 et la paroi intérieure 24.

La bride de raccordement 22 est reliée, par tout moyen connu, tel que des boulons, à une pièce de raccordement annulaire 26 au niveau du plan de jonction A. Avantageusement, et de façon connue, la pièce de raccordement annulaire 26 comprend une première partie de raccordement 28 formant bride et s'étendant selon une direction radiale et une deuxième partie de raccordement 30 tubulaire, de forme sensiblement cylindrique, s'étendant selon la direction longitudinale du moteur 1, de sorte que la section longitudinale de la pièce de raccordement 26 soit en forme de L. Ces formes sont préférées et peuvent être modifiées en fonction des impératifs de montage et de fabrication.

La première partie de raccordement est destinée à être fixée sur la bride de raccordement 22, par exemple au moyen de boulons 31.

La deuxième partie de raccordement 30 est destinée à être fixée sur la paroi intérieure 32 de la structure d'entrée d'air. Le montage peut se faire selon les méthodes connues, par exemple par des rivets aveugles 34, qui peuvent ne traverser qu'une partie de la paroi intérieure 32. Il est possible également (voir figure 4b) que la deuxième partie de raccordement 30 soit intégrée à la paroi intérieure 32. A cet égard, la pièce annulaire 26 peut être réalisée par exemple en plis de carbone. Bien que de conception plus complexe, ceci a pour avantage de supprimer les fixations 34 qui, comme il sera détaillé plus tard, altèrent la qualité acoustique de la structure de la paroi 32.

La paroi intérieure 32 est traitée de façon classique pour former une structure acoustique d'atténuation de l'onde sonore. Elle peut comporter une peau interne 36 perméable à l'air, une peau externe 38 imperméable à l'air, et une âme alvéolaire 40 ; d'autres solutions sont envisageables, comme le remplacement de la structure alvéolaire par de la mousse poreuse ou des microsphères. La paroi intérieure 32 se prolonge vers l'arrière du plan de jonction A, c'est-à-dire qu'elle comporte une partie en saillie 32' qui s'étend vers l'arrière depuis la projection radiale de la première partie 28 de la pièce de raccordement 26 sur la peau externe 38, à l'intérieur de la virole 25.

Avantageusement, tel que représenté, la partie en saillie 32' de la paroi intérieure 32 a une longueur suffisante pour que la structure de réduction de bruit 36, 38, 40 couvre sans discontinuité la distance d séparant le plan de jonction A entre la structure d'entrée d'air et le carter de soufflante, et la limite B entre la zone acoustique et la zone non acoustique du canal de soufflante. De cette façon, l'alternance entre zones acoustiques et zones non acoustiques est supprimée sur la paroi intérieure de la nacelle du moteur. Par ailleurs, avantageusement, l'épaisseur de l'âme alvéolaire 40 (ou de la structure d'atténuation d'onde sonore quelle qu'elle soit) n'est pas modifiée tout au long de la paroi intérieure 32, et donc de la partie en saillie 32'. Il en est de même pour la taille des cellules de l'âme alvéolaire, de sorte que cette dernière est optimisée pour l'onde acoustique à atténuer sur toute la surface.

Une partie d'extrémité 42 peut être prévue à l'extrémité arrière de la paroi intérieure 24 pour profiler les peaux interne 36 et externe 38 ; elle assure alors la jonction avec la paroi intérieure 24 du carter de soufflante 22. Cette partie d'extrémité 42 peut être renforcée ; elle n'est cependant pas nécessaire et peut être supprimée, une modification du profil de l'extrémité de l'âme alvéolaire 40 pouvant alors être préconisée suivant les contraintes de réduction de bruit (voir figure 4b).

Afin de prendre en compte le problème d'éclatement d'une pale de soufflante, qui se trouve dans la zone acoustique (voir figure 1), il est possible de renforcer la paroi intérieure 32 au niveau de la région critique. Un exemple d'une telle région est l'extrémité arrière de la zone acoustique. Des moyens de renfort connus 44 peuvent ainsi être ajoutés sur la partie de la partie en saillie 32', par exemple à son extrémité arrière : voir figure 4b. Il est possible également de raccourcir la partie en saillie 32' de la paroi intérieure 32.

Comme on l'a décrit précédemment, lorsqu'elle n'y est pas intégrée, la paroi intérieure 32 de la structure d'entrée d'air est fixée à la première partie 30 de la pièce de raccordement 26 par des moyens usuels, le plus souvent des rivets aveugles 34. En raison de la présence de la partie en saillie 32', qui peut être de taille importante suivant la gamme de moteur, et du porte-à-faux ainsi créé, il peut être souhaitable de renforcer la peau externe de la partie en saillie 32', au moins à proximité de son extrémité. Ceci peut être réalisé en fixant à la peau externe 38 une pièce de renfort annulaire 45 par des rivets aveugles 46, qui peuvent être de taille et de résistance inférieures à celles des rivets 34.

La présence des rivets aveugles 34 (et accessoirement 46) dans la paroi intérieure 32 change l'atténuation acoustique. Si la qualité globale reste peu altérée et les performances supérieures à celles connues dans l'état de la technique, il est possible de modifier l'agencement des pièces pour diminuer encore l'altération des propriétés de la structure de réduction de bruit 36, 38, 40, tout en ne modifiant pas obligatoirement la structure de la pièce de raccordement 26.

En figure 5 est représenté un mode de réalisation de l'invention dans lequel la pièce de raccordement 26 entre la structure d'entrée d'air et la bride de raccordement 22 est « inversée ». Dans cet exemple illustré, la pièce de raccordement 26 comporte toujours une première partie 28 destinée à être fixée à la bride 22, et une deuxième partie 30 destinée à être fixée sur la paroi intérieure 32. La section en coupe de la pièce 26 est ici encore en forme de L, même si, comme précédemment, des variantes sont possibles.

La deuxième partie 30 de la pièce de raccordement 26 est cependant dans ce mode de réalisation orientée vers l'arrière et fixée sur la paroi intérieure 32 en arrière du plan de jonction A. Ainsi, le porte-à-faux est évité, et il n'est plus nécessaire d'avoir parfois des moyens de renforcement supplémentaires tels que la pièce de renfort 45. De plus et surtout, tel qu'illustré, il est possible, bien que non nécessaire, d'augmenter la longueur de la première partie 30 de la pièce de raccordement 26 et de la partie en saillie 32' de façon à dépasser la limite B entre zone acoustique et zone non acoustique. Ce mode préféré entraîne qu'une partie au moins des moyens de fixation entre la pièce de raccordement 26 et la paroi intérieure 32 peut se situer dans une zone 48 non traitée acoustiquement de la partie en saillie 32'. L'âme alvéolaire 40, ou plus généralement la structure d'atténuation d'onde sonore, n'est donc pas altérée, ou peu et uniquement par les rivets 34 lorsqu'ils sont utilisés, sur toute la longueur de la zone acoustique.

Avantageusement, et tel qu'illustré sur la figure 5, il est dans ce cas possible de créer un évidement annulaire ou plusieurs évidements répartis sur la circonférence 50 dans l'extrémité arrière de la partie en saillie 32' de la paroi intérieure 32 : un tel évidement 50 permet à une partie au moins des moyens de fixation entre la pièce de raccordement 26 et la paroi intérieure 32 d'être accessibles des deux côtés, ce qui facilite le montage et le démontage. Des boulons 52 peuvent ainsi être utilisés à l'extrémité arrière de la paroi intérieure 32 où l'évidement 50 est créé.

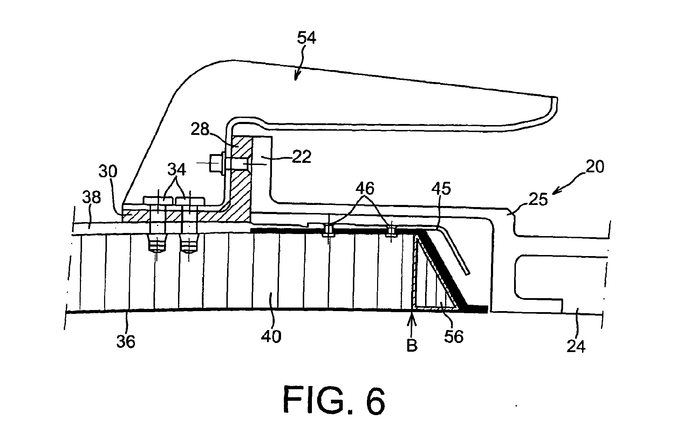

Par ailleurs, et quel que soit le mode de réalisation, il est avantageux de munir la pièce de raccordement 26 d'au moins une partie de centrage 54, tel qu'illustré sur la figure 6. Les parties de centrage s'étendent vers l'arrière à l'extérieur de la première partie 28, au-delà du plan de jonction A. Les parties de centrage 54 sont placées autour de la bride 22 de façon à assurer le centrage de la structure d'entrée d'air par rapport au carter de soufflante 20.

Bien entendu des combinaisons entre les divers éléments autres que celles représentées spécifiquement sur les figures sont possibles. Par ailleurs, les alternatives connues à la géométrie des différentes pièces sont inclues dans les ensembles selon l'invention. Ainsi par exemple, et tel qu'illustré sur la figure 6, il est possible de remplacer la partie d'extrémité 42 de la paroi intérieure 32 présentée sur la figure 4a par une structure acoustique renforcée 56 comportant une âme alvéolaire et des peaux interne et externe. Cette alternative est envisageable également en arrière de la limite B, ce qui allonge de fait la zone acoustique au-delà des exigences communes. De même, la pièce de raccordement 26 peut être réalisée selon le cas, soit en une seule partie annulaire monobloc, soit en plusieurs parties en arc de cercle, éclissées entre elles ou sur une partie indépendante.

## Revendications

1. Ensemble réducteur de bruit pour turboréacteur comprenant une structure d'entrée d'air (5) munie d'une paroi intérieure (32) ayant une structure d'atténuation de l'onde sonore (36, 38, 40), et une pièce annulaire (26) de raccordement munie d'une première partie de raccordement (28) destinée à être fixée à une bride (22) de carter de moteur et une deuxième partie de raccordement (30) tubulaire destinée à être fixée sur la paroi intérieure (32), **caractérisé en ce que**, lorsque la pièce annulaire (26) est fixée sur la paroi intérieure (32), la paroi intérieure (32) comporte une partie en saillie (32') qui s'étend vers l'arrière depuis la projection sur la paroi intérieure (32) de la première partie de raccordement (28) jusqu'à une extrémité arrière de la partie en saillie.

2. Ensemble réducteur de bruit selon la revendication 1 dans lequel la paroi intérieure (32) inclut une peau interne (36) perméable à l'air, une peau externe (38) imperméable à l'air et une âme alvéolaire (40), qui forment la structure d'atténuation de l'onde sonore.

3. Ensemble réducteur de bruit selon la revendication 2 dans lequel l'âme alvéolaire (40) de la paroi intérieure (32) est d'épaisseur constante.

4. Ensemble réducteur de bruit selon l'une des revendications 1 à 3 dans lequel l'extrémité arrière de la partie en saillie (32') inclut une structure acoustique renforcée (56).

5. Ensemble réducteur de bruit selon l'une des revendications 1 à 4 dans lequel l'extrémité arrière de la partie en saillie (32') comprend une partie de renfort non acoustique (42).

6. Ensemble réducteur de bruit selon la revendication 2 ou 3 dans lequel l'âme alvéolaire (40) de la paroi intérieure (32) se prolonge jusqu'à l'extrémité arrière de la partie en saillie (32').

7. Ensemble réducteur de bruit selon l'une des revendications 1 à 6 dans lequel une portion de la partie en saillie (32') est renforcée.

8. Ensemble réducteur de bruit selon l'une des revendications 1 à 7 dans lequel la pièce annulaire (26) de raccordement a une section longitudinale en forme de L telle que sa première partie (28) soit sensiblement perpendiculaire à sa deuxième partie (30).

9. Ensemble réducteur de bruit selon l'une des revendications 1 à 8 dans lequel la deuxième partie (30) de la pièce annulaire (26) est fixée sur la paroi intérieure (32) du côté opposé à la partie en saillie (32') par rapport à la première partie (28).

10. Ensemble réducteur de bruit selon l'une des revendications 1 à 9 dans lequel la deuxième partie (30) de la pièce annulaire (26) fait partie intégrante de la paroi intérieure (32).

11. Ensemble réducteur de bruit selon l'une des revendications 1 à 8 dans lequel la deuxième partie (30) de la pièce annulaire (26) est fixée par des moyens de fixation (34, 52) sur la partie en saillie (32'), entre l'extrémité arrière de la partie en saillie (32') et la projection de la première partie (28).

12. Ensemble réducteur de bruit selon la revendication 11 dans lequel l'extrémité arrière de la partie en saillie (32') présente un évidement (50) tel qu'une partie (52) au moins des moyens de fixation débouche dans l'évidement (50).

13. Ensemble réducteur de bruit selon l'une des revendications 1 à 12 dans lequel la pièce annulaire de raccordement (26) comprend en outre au moins une partie de centrage (54).

14. Ensemble réducteur de bruit selon l'une des revendications 1 à 13 comprenant en outre un carter de soufflante (20) muni d'une bride extérieure annulaire (22) à son extrémité avant et fixé à la première partie (28) de la pièce annulaire (26) par ladite bride.

## Claims

1. Noise reduction assembly for a turbojet comprising an air intake structure (5) fitted with an inner wall (32) with a sound wave attenuation structure (36, 38, 40) and an annular connection part (26) fitted with a first connection part (28) that will be fixed to an engine casing flange (22) and a second tubular connection part (30) that will be fixed on the inner wall (32), **characterized in that** when the annular connection part (26) is fixed to the inner wall (32), the inner wall (32) comprises a projecting part (32') that extends towards the aft direction from the projection on the inner wall (32) of the first connection part (28) to an aft end of the projecting part.

2. Noise reduction assembly according to claim 1, in which the inner wall (32) includes an inner skin (36) permeable to air, an outer skin (38) impermeable to air, and a cellular core (40), that form the sound wave attenuation structure.

3. Noise reduction assembly according to claim 2, in which the cellular core (40) of the inner wall (32) has a constant thickness.

4. Noise reduction assembly according to one of the claims 1 to 3, in which the aft end of the projecting part (32') includes a reinforced acoustic structure (56).

5. Noise reduction assembly according to one of the claims 1 to 4, in which the aft end of the projecting part (32') comprises a non-acoustic stiffener part (42).

6. Noise reduction assembly according to claim 2 or 3, in which the cellular core (40) of the inner wall (32) extends towards the aft end of the projecting part (32').

7. Noise reduction assembly according to one of the claims 1 to 6, in which a portion of the projecting part (32') is reinforced.

8. Noise reduction assembly according to one of the claims 1 to 7, in which the longitudinal section of the annular connection part (26) is an L shape such that its first part (28) is substantially perpendicular to its second part (30).

9. Noise reduction assembly according to one of the claims 1 to 8, in which the second portion (30) of the annular part (28) is fixed on the inner wall (32) on the side opposite the projecting part (32') with respect to the first portion (28).

10. Noise reduction assembly according to one of the claims 1 to 9, in which the second portion (30) of the annular part (26) forms an integral part of the inner wall (32).

11. Noise reduction assembly according to one of the claims 1 to 8, in which the second portion (30) of the annular part (32) is fixed by attachment means (34, 52) to the projecting part (32') between the aft end of the projecting part (32') and the projection of the first portion (28).

12. Noise reduction assembly according to claim 11, in which the aft end of the projecting part (32') has a recess (50) such that at least one portion (52) of the attachment means issues into the recess (50).

13. Noise reduction assembly according to one of the claims 1 to 12, in which the annular connection part (26) also comprises at least one centring part (54).

14. Noise reduction assembly according to one of the claims 1 to 13, also comprising a fan casing (20) fitted with an annular outer flange (22) at its forward end and fixed to the first portion (28) of annular part (26) by said flange.

## Patentansprüche

1. Schalldämpfungseinheit für ein Strahltriebwerk mit einer Lufteinlassstruktur (5), die mit einer Innenwand (32) mit einer Schallwellen-Dämpfungsstruktur (36,38,40) versehen ist, sowie mit einem ringförmigen Verbindungsteil (26), das mit einem ersten Verbindungsabschnitt (28), der an einem Flansch (22) des Triebwerkgehäuses zu befestigen ist, sowie mit einem zweiten rohrförmigen Verbindungsabschnitt (30), der an der Innenwand (32) zu befestigen ist, versehen ist, **dadurch gekennzeichnet, dass**, wenn das ringförmige Teil (26) an der Innenwand (32) befestigt ist, die Innenwand (32) einen vorstehenden Abschnitt (32') umfasst, der sich von dem Vorsprung an der Innenwand (32) des ersten Verbindungsabschnitts (28) bis zu einem hinteren Ende des vorstehenden Abschnitts erstreckt.

2. Schalldämpfungseinheit nach Anspruch 1, wobei die Innenwand (32) eine luftdurchlässige Innenverkleidung (36), eine luftundurchlässige Außenverkleidung (38) sowie einen Zellkern (40) aufweist, welche die Schallwellen-Dämpfungsstruktur bilden.

3. Schalldämpfungseinheit nach Anspruch 2, wobei der Zellkern (40) der Innenwand (32) eine konstante Dicke aufweist.

4. Schalldämpfungseinheit nach einem der Ansprüche 1 bis 3, wobei das hintere Ende des vorstehenden Abschnitts (32') eine verstärkte akustische Struktur (56) aufweist.

5. Schalldämpfungseinheit nach einem der Ansprüche 1 bis 4, wobei das hintere Ende des vorstehenden Abschnitts (32') einen nicht-akustischen Verstärkungsabschnitt (42) aufweist.

6. Schalldämpfungseinheit nach Anspruch 2 oder 3, wobei der Zellkern (40) der Innenwand (32) sich bis zum hinteren Ende des vorstehenden Abschnitts (32') fortsetzt.

7. Schalldämpfungseinheit nach einem der Ansprüche 1 bis 6, wobei ein Teil des vorstehenden Abschnitts (32') verstärkt ist.

8. Schalldämpfungseinheit nach einem der Ansprüche 1 bis 7, wobei das ringförmige Verbindungsteil (26) einen Längsschnitt in L-Form aufweist, so dass sein erster Abschnitt (28) im wesentlichen senkrecht zu seinem zweiten Abschnitt (30) ist.

9. Schalldämpfungseinheit nach einem der Ansprüche 1 bis 8, wobei der zweite Abschnitt (30) des ringförmigen Teils (26) an der Innenwand (32) auf der dem vorstehenden Abschnitt (32') in bezug auf den ersten Abschnitt (28) gegenüberliegenden Seite befestigt ist.

10. Schalldämpfungseinheit nach einem der Ansprüche 1 bis 9, wobei der zweite Abschnitt (30) des ringförmigen Teils (26) ein integraler Teil der Innenwand (32) ist.

11. Schalldämpfungseinheit nach einem der Ansprüche 1 bis 8, wobei der zweite Abschnitt (30) des ringförmigen Teils (26) durch Befestigungsmittel (34,52) an dem vorstehenden Abschnitt (32') zwischen dem hinteren Ende des vorstehenden Abschnitts (32') und dem Vorsprung des ersten Abschnitts (28) befestigt ist.

12. Schalldämpfungseinheit nach Anspruch 11, wobei das hintere Ende des vorstehenden Abschnitts (32') eine Ausnehmung (50) aufweist, so dass mindestens ein Teil (52) der Befestigungsmittel in die Ausnehmung (50) mündet.

13. Schalldämpfungseinheit nach einem der Ansprüche 1 bis 12, wobei das ringförmige Verbindungsteil (26) außerdem mindestens einen Zentrierabschnitt (54) umfasst.

14. Schalldämpfungseinheit nach einem der Ansprüche 1 bis 13, außerdem mit einem Gebläsegehäuse (20), das mit einem ringförmigen Außenflansch (22) an seinen vorderen Ende versehen ist und an dem ersten Abschnitt (28) des ringförmigen Teils (26) durch den Flansch befestigt ist.
